# EUROPÄISCHE PATENTSCHRIFT

(11) **EP 0 622 568 B1**
(45) Veröffentlichungstag und Bekanntmachung des Hinweises auf die Patenterteilung: **28.08.1996**
(21) Anmeldenummer: 94102053.9
(22) Anmeldetag: 10.02.1994
(51) Int. Cl.: F16H 55/36, F16F 15/12

(54) **Riemenscheibe**
Pulley
Poulie

(30) Priorität: 27.04.1993 DE 4313756
(43) Veröffentlichungstag der Anmeldung: 02.11.1994
(73) Patentinhaber: Firma Carl Freudenberg, D-69469 Weinheim (DE)
(72) Erfinder: Ochs, Winfried, Dr., D-64665 Alsbach-Hähnlein (DE); Ullrich, Günter, D-69502 Hemsbach (DE); Hönlinger, Herwig, D-68649 Gross-Rohrheim (DE)

(56) Entgegenhaltungen:
- US-A- 2 722 138
- US-A- 2 723 573
- SAE QUARTERLY TRANSACTIONS, Bd.6, Nr.1, Januar 1952, NEW YORK, USA Seite 58

## Beschreibung

Die Erfindung betrifft eine Riemenscheibe mit im wesentlichen topfförmigem Profil, die zumindest in axialer Richtung einerseits von einer einstückig angeformten Bordscheibe begrenzt ist, wobei die Bordscheibe mittels eines Dämpfungsrings aus elastomerem Werkstoff mit einem Trägheitsring verbunden ist und wobei sich die Bordscheibe im wesentlichen in radialer Richtung erstreckt und auf der der Riemenlauffläche abgewandten Seite mit dem Dämpfungs- und dem Trägheitsring verbunden ist.

Eine solche Riemenscheibe ist aus der US 2,723,573 bekannt, entspricht dem Oberbegriff des Anspruchs 1 und gelangt zum Antrieb von Nebenaggregaten in Kraftfahrzeugen zur Anwendung. An einem axialen Ende einer Kurbelwelle ist die Riemenscheibe befestigt, wobei auf der der Kurbelwelle abgewandten Seite der Riemenscheibe ein Schwungring angeordnet ist, der durch einen Federkörper mit der Riemenscheibe verbunden ist.

Aus der US 2,722,138 ist eine Riemenscheibe bekannt, die aus einem Nabenring besteht auf dessen Außenumfang zwei kreisringförmige Blechteile aufgepreßt sind. Die beiden Blechteile sind einander axial benachbart zugeordnet und begrenzen in radialer Richtung außenseitig eine radial nach außen offene, V-förmig Nut, die die Aufnahme für einen entsprechend gestalteten Riemen bildet. Eines der Blechteile ist im Bereich seiner radial äußeren Begrenzung in axialer Richtung umgeformt und umschließt einen Schwungring außenumfangsseitig mit radialem Abstand. Innerhalb des durch den Abstand gebildeten Spalts ist ein Dämpfungsring aus elastomerem Werkstoff angeordnet.

Riemenscheiben gelangen beispielsweise zum Antrieb von Nebenaggregaten in Kraftfahrzeugen zur Anwendung. Um auftretende Schwingungen dämpfen zu können, kann beispielsweise ein separat erzeugter und an der Riemenscheibe befestigter Torsionsschwingungsdämpfer vorgesehen sein. Dabei ist allerdings zu beachten, daß die zweistückige Ausbildung von Riemenscheibe und Torsionsschwingungsdämpfer in montagetechnischer und wirtschaftlicher Hinsicht wenig befriedigend ist.

Der Erfindung liegt die Aufgabe zugrunde, ein Riemenscheibe der eingangs genannten Art derart weiterzuentwickeln, daß diese eine gute Relativverdrehbarkeit zwischen dem Trägheitsring und dem Riemenscheibenkörper aufweist. Außerdem sollen in radialer Richtung auftretende Schwingungen gedämpft werden können.

Diese Aufgabe wird erfindungsgemäß mit den Merkmalen von Anspruch 1 gelöst. Auf vorteilhafte Ausgestaltungen nehmen die Unteransprüche Bezug.

Zur Lösung der Aufgabe ist es vorgesehen, daß der Trägheitsring - im Querschnitt betrachtet - winkelförmig ausgebildet ist und mit seinem Axialvorsprung mittels einstückig ausgebildeten, entsprechend geformten Dämpfungsrings an der Innenseite der Riemenlauffläche festgelegt ist, daß der Dämpfungsring die Stirnseite des Axialvorsprungs überdeckt und sich bis zum Boden den topfförmigen Riemenscheibe erstreckt, daß der elastomere Werkstoff des Dämpfungsrings nur am Axialvorsprung oder der Riemenscheibe festgelegt ist, so daß auf der in axialer Richtung gegenüberliegenden Seite der elastomere Werkstoff ungehaftet und gleitend abgestützt ist. Der Trägheitsring ist winkelförmig ausgebildet und mit seinem Axialvorsprung mittels eines einstückig ausgebildeten, entsprechend geformten Dämpfungsrings an der Innenseite der Riemenlauffläche festgelegt. Hierbei ist von Vorteil, daß die Berührungsfläche des elastomeren Werkstoffs an der Bordscheibe relativ vergrößert ist. Dadurch sind gleichbleibend gute Gebrauchseigenschaften während einer langen Gebrauchsdauer gewährleistet. Außerdem können neben Torsionsschwingungen durch den L-förmigen Trägheitsring auch Schwingungen, die in radialer Richtung auftreten, gedämpft werden.

Der Dämpfungsring überdeckt die Stirnseite des Axialvorsprungs und ist in axialer Richtung zwischen dem Axialvorsprung und dem Riemenscheibenkörper abgestützt. Hinsichtlich einer besseren Relativverdrehbarkeit des Riemenscheibenkörpers zum Trägheitsring ist der elastomere Werkstoff nur am Axialvorsprung oder am Riemenscheibenkörper gehaftet festgelegt. Auf der in axialer Richtung gegenüberliegenden Seite ist der elastomere Werkstoff dann ungehaftet und gleitend abgestützt.

Bei der erfindungsgemäßen Riemenscheibe ist von Vorteil, daß der Torsionsschwingungsdämpfer einstückig mit der Riemenscheibe ausgebildet ist. Die Herstellung des Bauteils sowie die Montage, beispielsweise an einer Verbrennungskraftmaschine, ist dadurch vereinfacht. Der Torsionsschwingungsdämpfer kann in seinem Aufbau bekannten Torsionsschwingungsdämpfern entsprechen, wobei der Dämpfungsring, der zwischen dem Naben- und dem Trägheitsring angeordnet ist und beide Teile drehelastisch aufeinander abstützt, eingeschossen oder vulkanisiert sein kann.

Die Bordscheibe erstreckt sich im wesentlichen in radialer Richtung und ist auf der der Riemenlauffläche abgewandten Seite mit dem Dämpfungs- und dem Trägheitsring verbunden. Die axiale Ausdehnung der Riemenscheibe ist bei einer derartigen Ausgestaltung im Vergleich zu Riemenscheiben ohne Torsionsschwingungsdämpfer nur unwesentlich größer.

Gemäß einer vorteilhaften Ausgestaltung kann der Trägheitsring aus Blech bestehen und im Bereich seiner außenumfangsseitigen Begrenzung mit einer wulstförmigen Verdickung versehen sein. Bleche sind einfach umformbar und eignen sich daher zur kostengünstigen Herstellung der Riemenscheibe. Die Form der wulstförmigen Verdickung sowie deren Masse sind von den jeweiligen Gegebenheiten des Anwendungsfalles abhängig.

Die Verdickung kann aus dem umgeformten Blechrand des Trägheitsringes bestehen, wobei der Blechrand beispielsweise umgebördelt ist.

Nach einer anderen Ausgestaltung kann der Blechrand beispielsweise gestaucht sein. Hierbei ist von Vorteil, daß Unwuchterscheinungen, hervorgerufen durch den Trägheitsring, während des Betriebs der Riemenscheibe minimiert sind.

Die Riemenlauffläche und der Axialvorsprung können sich parallel zueinander erstrecken, wobei die Bordscheibe und der in axialer Richtung benachbarte Radialvorsprung des Trägheitsringes einen Spalt begrenzen, der mit zunehmender radialer Erstreckung eine zunehmende axiale Weite aufweist. Im Anschluß an die Herstellung der Riemenscheibe mit integriertem Torsionsschwingungsdämpfer besteht die Möglichkeit, den Nabenring und/oder den Trägheitsring bei vulkanisiertem Dämpfungsring derart zu kalibrieren, daß gebrauchsdauerverringernde Zugspannungen im elastomerem Werkstoff des Dämpfungsrings zuverlässig vermieden werden. Desweiteren ist bei einer derartigen Ausgestaltung von Vorteil, daß eine höhere Dauerfestigkeit erzielt werden kann.

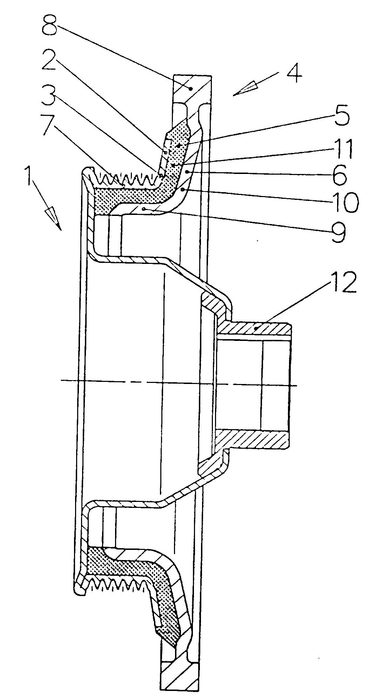

Die erfindungsgemäße Riemenscheibe wird nachfolgend anhand der beigefügten Zeichnung näher erläutert.

In der Figur ist ein Ausführungsbeispiel der erfindungsgemäßen Riemenscheibe 1 in quergeschnittener Darstellung schematisch gezeigt. Die Riemenscheibe 1 umfaßt einen Riemenscheibenkörper, der eine Riemenauflagefläche 7 umfaßt und drehfest mit einem Antrieb 12 verbunden ist. Der Antrieb 12 kann beispielsweise durch die Kurbelwelle einer Verbrennungskraftmaschine gebildet sein. Der Riemenscheibenkörper ist in diesem Ausführungsbeispiel im wesentlichen S-förmig geschwungen. Auf der dem Antrieb 12 zugewandten axialen Begrenzung ist die Riemenscheibe 1 mit einer Bordscheibe 2 versehen, die einstückig mit dem Riemenscheibenkörper verbunden ist und sich in radialer Richtung erstreckt. Die Bordscheibe 2 ist als Nabenring 3 eines Torsionsschwingungsdämpfers 4 ausgebildet, wobei der Nabenring 3 in diesem Ausführungsbeispiel adhäsiv mit einem Dämpfungsring 5 aus elastomerem Werkstoff verbunden ist. Die Ausgestaltung der Riemenlauffläche kann von den hier gezeigten Ausführungsbeispielen abweichen, ebenso wie die Dimensionierung und Gestaltung der Dämpfungs- 5 und Trägheitsringe 6.

Der Dämpfungsring 5 und der Trägheitsring 6 weisen ein im wesentlichen L-förmiges Profil auf.

Zusätzlich zu der Anbindung am Radialvorsprung 10 des Trägheitsringes 6, ist der Dämpfungsring 5 im Bereich seines Axialvorsprungs 9 mit der Innenseite der Riemenlauffläche 7 verbunden.

## Patentansprüche

1. Riemenscheibe (1) mit im wesentlichen topfförmigem Profil, die zumindest in axialer Richtung einerseits von einer einstückig angeformten Bordscheibe (2) begrenzt ist, wobei die Bordscheibe (2) mittels eines Dämpfungsrings (5) aus elastomerem Werkstoff mit einem Trägheitsring (6) verbunden ist und wobei sich die Bordscheibe (2) im wesentlichen in radialer Richtung erstreckt und auf der der Riemenlauffläche (7) abgewandten Seite mit dem Dämpfungs- (5) und dem Trägheitsring (6) verbunden ist, dadurch gekennzeichnet, daß der Trägheitsring (6) - im Querschnitt betrachtet - winkelförmig ausgebildet ist und mit seinem Axialvorsprung (9) mittels des einstückig ausgebildeten, entsprechend geformten Dämpfungsrings (5) an der Innenseite der Riemenlauffläche (7) festgelegt ist, daß der Dämpfungsring (5) die Stirnseite des Axialvorsprungs (9) überdeckt und sich bis zum Boden der topfförmigen Riemenscheibe (1) erstreckt, daß der elastomere Werkstoff des Dämpfungsrings (5) nur am Axialvorsprung (9) oder der Riemenscheibe (1) festgelegt ist, sodaß auf der in axialer Richtung gegenüberliegenden Seite der elastomere Werkstoff ungehaftet und gleitend abgestützt ist.

2. Riemenscheibe nach Anspruch 1, dadurch gekennzeichnet, daß der Trägheitsring (6) aus Blech besteht und im Bereich seiner außenumfangsseitigen Begrenzung mit einer wulstförmigen Verdickung (8) versehen ist.

3. Riemenscheibe nach Anspruch 2, dadurch gekennzeichnet, daß die Verdickung (8) aus dem umgeformten Blechrand des Trägheitsringes (6) besteht.

4. Riemenscheibe nach Anspruch 3, dadurch gekennzeichnet, daß der Blechrand umgebördelt ist.

5. Riemenscheibe nach einem der Ansprüche 1 bis 4, dadurch gekennzeichnet, daß sich die Riemenlauffläche (7) und der Axialvorsprung (9) parallel zueinander erstrecken und daß die Bordscheibe (2) und der in axialer Richtung benachbarte Radialvorsprung (10) des Trägheitsrings (6) einen Spalt (11) begrenzen, der mit zunehmender radialer Erstreckung eine zunehmende axiale Weite aufweist.

## Claims

1. A pulley (1) which has a substantially pot-shaped profile and is bounded at least in the axial direction on one side by an integrally moulded-on rim disc (2), the rim disc (2) being connected to an inertia ring (6) by means of a damping ring (5) made of elastomer material, and the rim disc (2) extending substantially in the radial direction and being connected to the damping ring (5) and the inertia ring (6) on the side facing away from the belt running surface (7), characterized in that - viewed in cross-section - the inertia ring (6) is of angular design and is fixed by its axial projection (9) on the inner side of the belt running surface (7) by means of the integrally designed, correspondingly shaped damping ring (5), in that the damping ring (5) covers the end face of the axial projection (9) and extends up to the base of the pot-shaped pulley (1), in that the elastomer material of the damping ring(5) is fixed only on the axial projection (9) or on the pulley (1) so that the elastomer material is supported in a non-adhering and sliding manner on the opposite side in the axial direction.

2. A pulley according to claim 1, characterized in that the inertia ring (6) consists of sheet-metal and is provided with a bead-shaped thickening (8) in the region of its outer circumferential boundary.

3. A pulley according to claim 2, characterized in that the thickening (8) consists of the shaped sheet-metal edge of the inertia ring (6).

4. A pulley according to claim 3, characterized in that the sheet-metal edge is flanged.

5. A pulley according to any one of claims 1 to 4, characterized in that the belt running surface (7) and the axial projection (9) extend parallel to each other, and in that the rim disc (2) and the axially adjacent radial projection (10) of the inertia ring (6) bound a gap (11) which, as its radial extent increases, has an increasing axial width.

## Revendications

1. Poulie (1) pourvue d'un profil ayant essentiellement la forme d'un pot, qui est limitée, au moins dans la direction axiale, d'une part par un disque de bordure (2) solidaire avec elle, le disque de bordure (2) étant relié à une bague d'inertie (6) au moyen d'une bague d'amortissement (5) en matière élastomère et le disque de bordure (2) s'étendant essentiellement en direction radiale et étant relié, sur le côté éloigné de la surface de roulement (7) pour une courroie, à la bague d'amortissement (5) et à la bague d'inertie (6), caractérisé en ce que la bague d'inertie (6) - vue en coupe - est exécutée de manière angulaire et est fixée, par sa saillie axiale (9), sur la face interne de la surface de roulement (7) pour une courroie au moyen de la bague d'amortissement (5) de forme correspondante exécutée de manière unitaire, en ce que la bague d'amortissement (5) couvre le côté frontal de la saillie axiale (9) et s'étend jusqu'au fond de la poulie (1) en forme de pot, en ce que la matière élastomère de la bague d'amortissement (5) est fixée seulement sur la saillie axiale (9) ou sur la poulie (1), de manière à ce que, sur le côté opposé en direction axiale, la matière élastomère soit appuyée de manière non adhérente et glissante.

2. Poulie selon la revendication 1, caractérisée en ce que la bague d'inertie (6) est faite de tôle et est pourvue, dans la zone de sa limite située du côté de sa circonférence externe, d'un épaississement (8) en forme de bourrelet.

3. Poulie selon la revendication 2, caractérisée en ce que l'épaississement (8) est formé par le bord de tôle déformé de la bague d'inertie (6).

4. Poulie selon la revendication 3, caractérisée en ce que le bord de tôle est bridé.

5. Poulie selon l'une des revendications 1 à 4, caractérisée en ce que la surface de roulement (7) pour une courroie et la saillie axiale (9) s'étendent parallèlement l'une à l'autre et en ce que le disque de bordure (2) et la saillie radiale (10) de la bague d'inertie (6), contiguë dans la direction axiale, limitent une fente (11) dont la largeur axiale augmente à mesure que son étendue radiale augmente.
